# EUROPEAN PATENT SPECIFICATION

(11) **EP 2 485 519 B1**
(45) Date of publication and mention of the grant of the patent: **12.10.2016**
(21) Application number: 11153015.0
(22) Date of filing: 02.02.2011
(51) Int. Cl.: H04W 16/14, H04W 52/24, H04W 88/08, H04W 52/14

(54) **IMPROVED CONTROL OF TRANSMISSION IN COEXISTING WIRELESS COMMUNICATIONS SYSTEMS**
VERBESSERTE STEURUNG DER ÜBERTRAGUNG IN KOEXISTIERENDEN KOMMUNIKATIONSSYSTEMEN
CONTRÔLE AMÉLIORÉ DE TRANSMISSION DANS LES SYSTÉMES DE COMMUNICATION SANS FIL

(43) Date of publication of application: 08.08.2012
(73) Proprietor: Airbus Defence and Space Oy, 00380 Helsinki (FI); Airbus DS SAS, 78990 Elancourt (FR)
(72) Inventor: Grech, Sandro, BATH, BA2 3ND (GB); Brännback, Johan, 00200, Helsingfors (FI); Gruet, Christophe, 78990, Elancourt (FR); Georgeaux, Eric, 78180, MONTIGNY LE BRETONNEUX (FR)
(74) Representative: Kolster Oy Ab

(56) References cited:
- EP-A2- 2 043 271
- WO-A1-2007/039557
- WO-A2-2008/027957
- US-A1- 2010 309 806

## Description

### FIELD OF THE INVENTION

The present invention relates to telecommunications and especially to control of transmission power levels in a telecommunications system frequency ranges of two geographically co-existing radio systems sharing all or part of a frequency band.

### BACKGROUND ART

High transmit power on a radio link has some well-known benefits. A high transmit power translates into a high signal power at the receiver, and a resulting high signal-to-noise ratio reduces the experienced bit error rate in a radio link. A high signal-to-noise ratio also enables a system to transmit at a high data rate, which results in improved spectral efficiency. Increased transmit power in a wireless channel also provides more protection against signal fade.

US 2010/0309806 discloses utilization of so called white space spectrum. In US 2010/0309806 a spectrum manager and base station controller for a wireless radio access network allocates TV band white space to all TV band devices under its control using: an allocation policy; information pulled/pushed from a white space database, spectrum usage data supplied by a spectrum sensing engine, and information received from at least one other peer spectrum manager and base station controller for the wireless radio access network.

On the other hand, user terminals with increased transmit power have a high overall power consumption. In addition, Interference to transmissions in the same frequency band is increased.

Radio system design balances between these advantages and disadvantages. Interference reduction is always important, but not that critical in radio systems where transmitting terminals are assigned orthogonal resources in the uplink. However, in cellular spread-spectrum systems transmitting terminals share a single frequency band and are only separated by different spreading codes. In such systems the number of users that a cell can support, as well as the size of the cell are typically limited by the amount of interference present in the cell. Increased interference results in decreased cell capacity and decreased cell size. In spread spectrum systems it is thus fundamental to keep the co-channel interference experienced by receivers strictly under control.

The challenges for the transmit power control algorithms are even more difficult when two radio systems need to co-exist at least partly in same geographical areas and share all or part of a frequency band. A radio system has a range of wave frequencies within which the radio system is allowed to transmit and receive. Radio spectrum is typically government regulated, and different parts of the radio spectrum are used for different radio transmission technologies and applications. Each of these parts has a plan which dictates how the specific frequency range is to be used and shared, to avoid interference and to set protocol for the compatibility of transmitters and receivers. Through these carefully managed frequency spectrum configurations, the geographical co-existence of two radio systems has traditionally been easy to deal with. Inter-system interference has been efficiently managed by ensuring appropriate guard bands between the applied frequency ranges, and by arranging appropriate transmitter and receiver performance characteristics to the transmitting elements. However, recently the situation has become more complex.

Economically viable implementation of a radio system with wide-area coverage requires that the size of cells in the radio system is large enough. Propagation of radio waves is dependent on the frequency range they use, so frequency ranges that enable these economically viable implementations are running short already in many parts of the world.

One very interesting option to overcome the experienced lack of free frequency ranges is to configure two different types of radio systems such that their geographical coverage and their applied frequency ranges can at least partly overlap. A specifically interesting scheme has been a co-existing combination of a broadband radio system and a narrowband radio system. However, in such configurations, the traditional mechanisms for controlling inter-system interference do not provide appropriate results. In order to achieve acceptable interference levels in the narrowband radio systems, the uplink transmissions of the co-existing broadband radio system would have to be consistently suppressed. While such arrangements might prove somehow operative, the performance of the broadband system would significantly deteriorate.

WO2008/027957 discloses a method of reducing interference by an ultrawideband orthogonal frequency division multiplexing (OFDM) communication system transmitter with narrowband communication systems, comprising receiving an indication of frequencies used by narrowband communication systems; nulling, in the frequency domain, information of an OFDM symbol otherwise expected to be transmitted at the frequencies used by the narrowband communication systems; and filtering, in the time domain, information of the OFDM symbol otherwise expected to be transmitted at the frequencies used by the narrowband communication systems. Another method disclosed in WO2008/027957 comprises nulling information for subcarriers, in the frequency domain, intended for transmission at frequencies indicated as being used by other communication systems.

### SUMMARY

The object of the invention is to provide an efficient method to eliminate, or at least alleviate inter-system interference between two at least partly geographically co-existing radio systems that at least partly share a same frequency range. The invention is defined in independent claims comprising two inter-related method claims, an apparatus claim, a system claim, and a computer program product claim. Preferred embodiments of the invention are defined in a number of dependent claims. Further advantages are discussed in more detail with respective embodiments of the invention.

In an aspect, the invention provides a method, comprising operating as a network node of a first radio system configured to transceive in all or part of a first frequency range; connecting to a network node managing a radio resource in a second radio system, the radio resource comprising all or part of a second frequency range, the first frequency range and the second frequency range overlapping at least partly, the overlapping part of the first and the second frequency ranges forming an intersected frequency range; determining carrier application status of carrier frequency bands of the first frequency range that are in the intersected frequency range, the carrier application status indicating whether a channel in the carrier frequency band is engaged in communication at the time of determination; and sending information on the determined carrier application status to the network node of the second radio system.

In a further aspect, the invention provides a method, comprising connecting to a network node of a first radio system transceiving over a first frequency range; operating as a network node of a second radio system transceiving over a second frequency range, the first frequency range and the second frequency range overlapping at least partly, the overlapping part of the first and the second frequency ranges forming an intersected frequency range; maintaining a transmission control function for controlling transmissions in one or more frequency ranges in the second frequency range, the transmission control function being responsive to carrier application status of one or more of the carrier frequency bands of the first radio system in the intersected frequency range, the carrier activity status of a carrier frequency band indicating whether a channel in the carrier frequency band is engaged in communication at the time of determination; receiving carrier activity status of one or more of the carrier frequency bands in the intersected frequency range from the access network node of the first radio system; and using the received carrier activity status in the transmission control function to control transmissions in one or more carrier frequency bands in the intersected frequency range

In a further aspect, the invention provides a communication apparatus configured to implement either of the above methods.

In a further aspect, the invention provides a communications system including a network node configured to implement the first of the above methods and a network node configured to implement the second of the above methods.

In a further aspect, the invention provides a computer program comprising program code means adapted to perform any of the above methods when the program is run on a computer device.

### BRIEF DESCRIPTION OF THE DRAWINGS

In the following, embodiments will be described in greater detail with reference to accompanying drawings, in which
Figure 1 illustrates an embodiment of a communications system;
Figure 2 illustrates interference between a broadband channel and an adjacent narrowband channel of two co-existing radio systems;
Figure 3 illustrates results of such suppression for channels of the broadband radio system;
Figure 4 illustrates a configuration of serving network nodes and served terminals;
Figure 5 illustrates an exemplary uplink radio access configuration of two serving network nodes;
Figure 6 illustrates another configuration of serving network nodes and served terminals;
Figure 7 illustrates another exemplary uplink radio access configuration of two serving network nodes;
Figure 8 illustrates methods implemented in serving network nodes of a first and a second radio system;
Figure 9 shows a block diagram illustrating an exemplary architecture for an embodiment of a communication apparatus.

### DETAILED DESCRIPTION OF SOME EMBODIMENTS

The following embodiments are exemplary. Although the specification may refer to "an", "one", or "some" embodiment(s) in several locations, this does not necessarily mean that each such reference is to the same embodiment(s), or that the feature only applies to a single embodiment. Single features of different embodiments may be combined to provide further embodiments.

In the following, different embodiments will be described with one example of system architecture of a communications system without, however, restricting the invention to the disclosed exact terms and structures. The invention is applicable to any telecommunications system where two interconnected radio systems may co-locate. A variety of system configurations applying a variety of communications technologies may be used separately or in combinations to implement the embodiments of the invention. Communications systems and technologies evolve continuously, and embodiments of the invention may require a number of modifications that are basically obvious for a person skilled in the art. Therefore all words and expressions of this specification should be interpreted broadly, as they are intended merely to illustrate, not to restrict, the embodiments.

Communication requires at least one access facility that provides a user with means to transmit information to one or more communicating parties and/or to receive information from one or more communication parties. For this purpose user terminals typically provide at least one communication interface and apply at least one access facility with it.

Some of the access facilities are networked telecommunication facilities that require use of communications system elements. This means that the user terminal, together with the software, applications, and content that are incorporated in it, functions within and is supported by a communications network CN. The communications network CN typically comprises at least one or more core networks that provide network services, and one or more access networks through which various user terminals may access the core network services. The core network refers herein to a facility that includes networks, system equipment and infrastructures that are configured to provide connections between access networks and/or between service enablers and access networks. An access network represents herein an implementation of network entities and interfaces that provide required transport bearer capabilities for the provision of communications services to terminal endpoints of the communications system. A terminal endpoint refers to uniquely identifiable communications system entity that may source and/or sink data streams of one or more defined protocol layers of the communications network.

The communications network CN may comprise fixed access networks and wireless access networks. A wireless access network comprises a remote information transmission mechanism that uses electromagnetic waves, like radio waves, to carry information. A radio system refers to a communications system, the wireless access network part of which applies radio waves to carry information between at least one network node and one or more user terminals. Network entities that implement necessary radio interfaces for the transport bearer capabilities are referred to as network nodes.

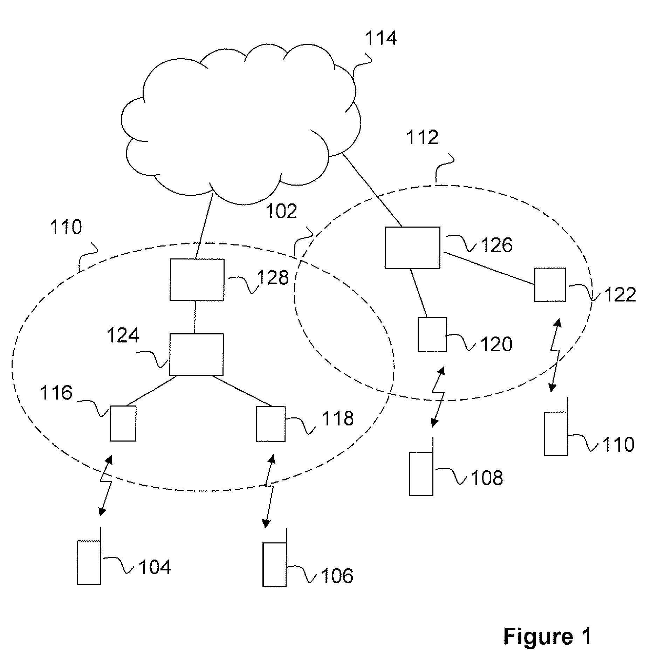

Figure 1 illustrates an embodiment of a communications system according to the present invention. The communications system comprises a communications network 102 and user terminals 104, 106, 108, 110. For conciseness, Figure 1 shows only wireless user terminals. For a person skilled in the art it is clear that a communications system may comprise also other types of user terminals that apply other types of interfaces for access. The communications network 102 comprises a first radio system 110 and a second radio system 112. The first radio system 110 and the second radio system 112 apply transfer protocols that are at least partly different from each other. This means that a user terminal needs a corresponding access facility to access either of the radio systems. A user terminal that is designed to access both of the radio systems needs to incorporate access facilities for both of the systems. Each of the radio system comprises network nodes 116, 118, 120, 122, 124, 126, 128 that are interconnected and provide a network configuration specific for either of the radio systems. The radio systems 110, 112 are further interconnected, in Figure 1 this interconnection is illustrated by means of a packet data network 114, via which one or more of the network elements of the radio systems 110, 112 are connected. Other types of interconnection between the radio systems may be applied within the scope of protection. For example, the two radio systems may be directly connected by means of a physical link between one or more network nodes in either side. Interconnection between radio systems is well known to a person skilled in the art and need not be described here in more detail.

Each link in a route of a data message transferred in the communications system 102 applies a defined data transfer protocol. The applied data transfer protocols provide various control functions by means of which they implement specific tasks in the overall transmission scheme. One of such tasks in a radio system is control of interference in the radio interface. An example of interference control mechanisms is uplink transmit power control that is typically used in radio systems to reduce terminal power consumption, to reduce receiver dynamic range requirements in the network side and to reduce interference between channels.

Uplink power may be controlled using, for example, following mechanisms:
- In open loop power control the transmitter of a terminal sets its output power to a specific value, based on estimated path loss. Open loop power control is typically used for setting initial uplink transmission powers when a terminal is accessing the network.
- In inner loop power control (also called fast closed loop power control) the terminal transmitter adjusts its output power in accordance with one or more transmit power control commands sent by a network node, in order to keep the received uplink Signal to Interference-plus-Noise Ratio (SINR) at a target SINR level.
- Outer loop power control is also a closed loop mechanism and is used to further maintain the quality of communication (bit and block error rates) while using as low transmit power as possible. In uplink outer loop power control the serving network node sets a target Signal to Interference Ratio SIR for each individual uplink inner loop power control. This target SIR is updated for each terminal according to an estimated uplink quality (Block

Error Ration, Bit Error Ratio) of each radio resource control connection. Other mechanisms may be applied within the scope of protection. For example, uplink power control may be implemented with a combination of functions from outer loop and inner loop power control mechanisms.

The first radio system 110 and the second radio system 112 comprise a number of network nodes. The network nodes 116, 118 of the first radio system, and network nodes 120, 122 of the second radio system are in the radio interface and exchange radio waves with the terminals 104, 106 and 108, 110. The network nodes 116, 118, 120, 122 provide the physical layers that the first radio system and the second radio use for the over-the-air communication. Depending on the applied technology, the term used to refer to these elements is a base station, a base transceiver station, a nodeB, etc.

Uplink power control may be implemented such that all necessary processes in the network side are performed in these radio interface network nodes completely. However, in some configurations steps, functions or stages of the uplink transmit power control process of a network node in the radio interface are performed as a co-ordinated co-operation of two or more functional units that are responsible for radio resource management of the network node, but are located in different physical network nodes. For example, in some narrowband radio systems (like GSM) radio interface operations of base stations in call set-up functions, signalling, use of radio channels and some maintenance tasks are controlled by a base station controller. On the other hand, TETRA systems do not typically include separate base station controllers; intelligent base stations control the radio interface under the control of exchanges. In the following, an entity implementing the procedures of the uplink transmit power control is referred to as a serving network node. Accordingly, in the following, the term serving network node is thus used to refer to a combination of physical network nodes incorporating functional units that implement operations described for the serving network node. In case all described operations are implemented in a base station type of network node, the logical term corresponds with the physical base station type of network node. In case the described operations are jointly implemented in functional units of two or more co-operating network nodes, the logical term refers to the combination of these co-operating network nodes.

Increasing transmit power on a radio link has well-known benefits. A high transmit power translates into a high signal power at the receiver, and a resulting high signal-to-noise ratio reduces the experienced bit error rate in a radio link. A high signal-to-noise ratio also enables a system using link adaptation to transmit at a high data rate, which results in greater spectral efficiency. Furthermore, use of high transmit power in a wireless channel provides more protection against signal fade. On the other hand, overall power consumption of user terminals with increased transmit power is high. In addition, interference to other users in the same frequency band is increased.

Interference reduction is important but not critical in radio systems where transmitting terminals are assigned orthogonal resources in the uplink. However, in cellular spread-spectrum systems transmitting terminals share a single frequency band and are only separated by different spreading codes. In such systems the number of users that a cell can support, as well as the size of the cell are typically limited by the amount of interference present in the cell. Increased interference results in decreased cell capacity and decreased cell size. In spread spectrum systems it is thus fundamental to keep the co-channel interference experienced by receivers strictly under control.

The challenges for the transmit power control algorithms are even more difficult when two radio systems need to co-exist at least partly in same geographical areas and to share all or part of a frequency band. A radio system is allocated a range of wave frequencies within which the radio system is allowed to transmit and receive. Radio spectrum is typically government regulated, and different parts of the radio spectrum are typically used for different radio transmission technologies and applications. Each of these parts has a plan which dictates how the specific frequency range is to be used and shared, to avoid interference and to set protocol for the compatibility of transmitters and receivers. Due to these carefully managed frequency spectrum configurations, the geographical co-existence of two radio systems has traditionally not been very problematic. Inter-system interference has been efficiently managed by ensuring appropriate guard bands between the applied frequency ranges, and by arranging appropriate transmitter and receiver performance characteristics to the transmitting elements.

However, economically viable implementation of a radio system with wide-area coverage requires that the size of cells in the radio system is large enough. Propagation of radio waves is dependent on the frequency range they use, so frequency ranges that enable these economically viable implementations are running short already in many parts of the world. One very interesting option to overcome the experienced lack of free frequency ranges is to configure two different types of radio systems such that their geographical coverage and their applied frequency ranges can at least partly overlap. A specifically interesting scheme has been a co-existing combination of a broadband radio system and a narrowband radio system.

Hereinafter, a frequency range is considered to correspond with a frequency band, i.e. a continuous set of frequencies lying between two specified limiting frequencies. The width of the frequency band corresponds with the difference between the two limiting frequencies. The frequency band available to a radio system may be divided into channels according to a specific multiple access scheme. The multiple access schemes vary depending on the applied technology. In some multiple access schemes, the available frequency band is divided into sub-bands and these sub-bands further to time- or code-divisioned channels. For the purposes of this description, the term broadband radio system is considered to refer to a radio system providing channels in carrier frequency bands, the width of which is in the order of one megahertz or more. For example, in WIMAX broadband radio systems the channels are in 1,25 MHz, 5 MHz, 10 MHZ or 20 MHz wide frequency bands. Correspondingly, the term narrowband radio system is considered to refer to a radio system providing channels carrier frequency bands, the width of which is in the order of 500 kilohertz or less. For example, in TETRAPOL or TETRA systems the channels are in 10 kHz, 12,5 kHz or 25 kHz wide carrier frequency bands, and in GSM in 200 kHz wide carrier frequency bands.

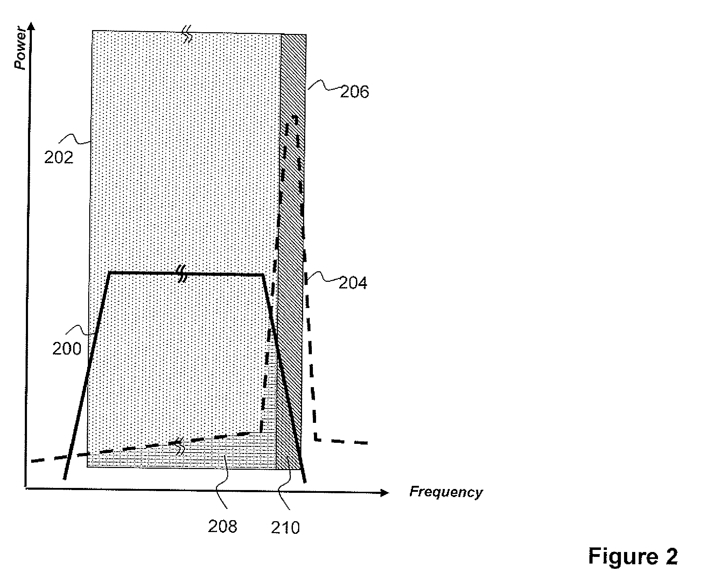

Uplink power control mechanisms traditionally do not take into consideration channels of other radio systems. Therefore, in a situation where a narrowband channel of one radio system and a broadband channel of another radio system would have to be adjacent or even overlap, none of the traditional methods for managing inter-system-interference is capable to provide a desired operational efficiency. Figure 2 illustrates effects of these conventional methods in managing interference between a broadband channel and an adjacent narrowband channel of two co-existing radio systems. The broadband channel 200 is illustrated by means of its spectral emission mask (SEM) that depicts the allowed power levels of signals in different frequencies of the frequency band 202 in which the broadband radio system is assigned to operate. The narrowband channel 204 is illustrated by means of its receiver filter (RX filter) that peaks in the narrow frequency band 206 adjacent to the frequency band of the broadband channel. In case of ideal, rectangular SEM and RX filters, there would be no overlap. However, in real life masks and filters cannot be ideal, which results in interference between the channels. A region 208 illustrates the interference caused to a signal of the narrowband channel 204 from a signal of the broadband channel 200. A region 210 illustrates the interference leaking from the broadband channel 200 to the narrowband channel 204. In conventional systems, in order to keep these interferences 208 and 210 at an acceptable level, the uplink transmit power levels of the broadband radio system need to be strongly suppressed.

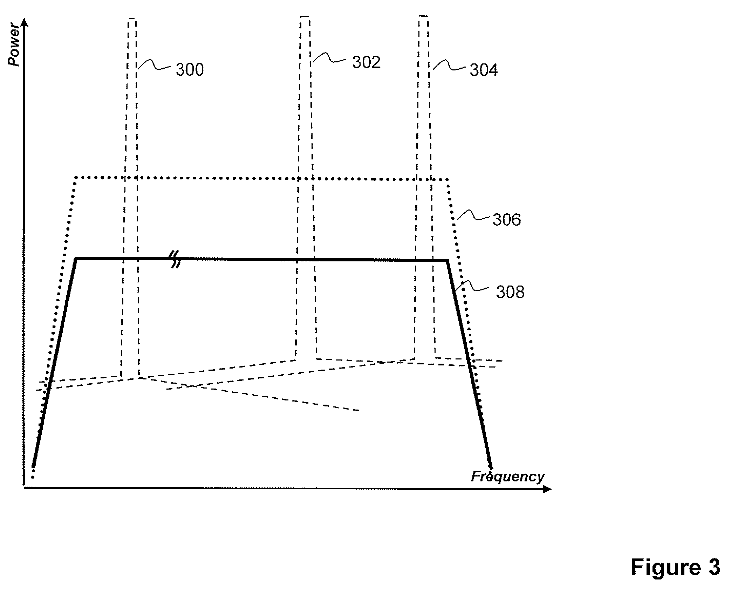

Figure 3 illustrates results of such suppression for channels of the broadband radio system due to one or more channels 300, 302, 304 of a co-existing narrowband system, when the frequency bands of the narrowband channels and the broadband channels overlap. The dotted line 306 illustrates the shape of SEM that the broadband radio system could potentially apply without the co-existing narrowband radio system, and the solid line 308 illustrates the shape of SEM actually applied in order to ensure that the interference to the narrowband channels remain in acceptable level. It is clear that this type of degradation of the broadband system is not desirable.

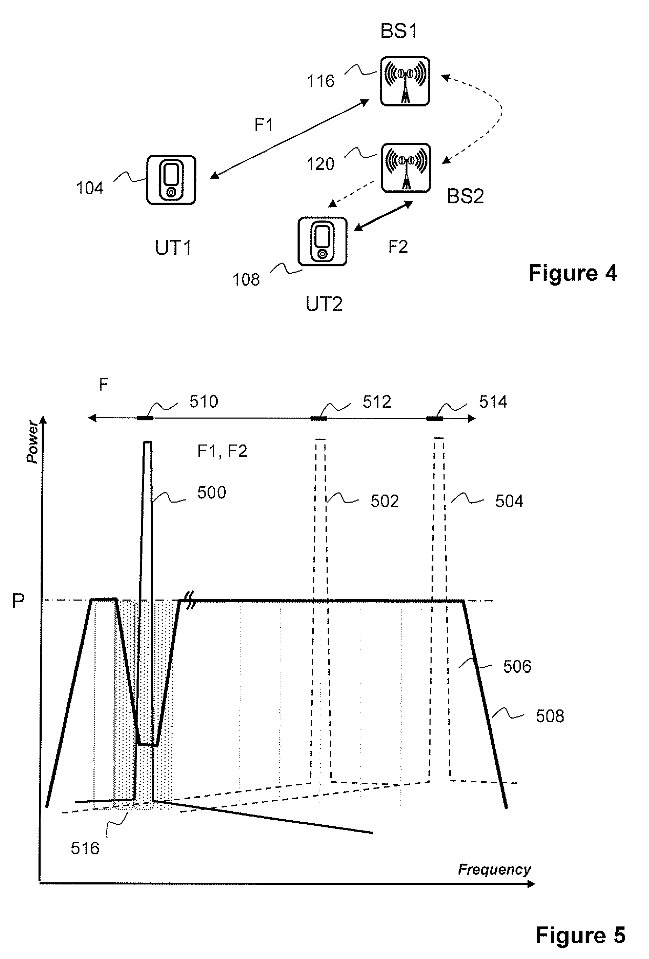

In the embodiments of the solution such degradation is eliminated or at least alleviated by means of co-ordinated co-operation between the first radio system and the second radio system. Figure 4 illustrates elements that may be used in embodiments of methods and devices according to the invention. The elements of Figure 4 are shown as parts of a communications system illustrated in Figure 1, so further description for the implementation may be directly derived from the description of Figure 1.

Figure 4 illustrates a user terminal UT1 104 of the first radio system and a user terminal UT2 108 of the second radio system. A serving network node BS1 116 of the first radio system communicates over the radio interface of the first radio system with UT1 and a serving network node BS2 120 of the second radio system communicates over the radio interface of the second radio system with UT2. The serving network nodes BS1, BS2 are interconnected such that they may exchange information with each other. As an example, it is assumed that the first radio system is a narrowband radio system, and the second radio system is a broadband radio system. It is, however, noted that the widths of the frequency bands of the radio system are not, as such, relevant for the inventive concept. Other frequency range configurations may be applied, as long as the radio systems use all or part of a same frequency band.

Figure 5 illustrates further the exemplary uplink radio access configuration of the serving network nodes of Figure 4. For simplicity, the first frequency range F1 applied by the first radio system and the second frequency range F2 applied by the second radio system overlap in full. However, based on this description, application of the solution to a frequency range configuration where the overlap is partial is clear for a person skilled in the art.

As in most of the narrowband radio systems, in order to avoid interference between neighbouring cells, the first radio system re-uses frequencies. This means that adjacent cells may only utilize different frequencies, but cells sufficiently far apart may operate on the same frequency. BS1 are thus configured to transceive over selected sub-frequency bands 500, 502, 504 of F1. These frequency bands 500, 502, 504 represent uplink carrier frequencies of the serving network node BS1 of the first radio system.

The exemplary second radio system applies at least in the uplink direction a Single Carrier - Frequency Division Multiple Access (SC-FDMA) scheme where physical resources are allocated by means of resource blocks. A resource block 506 refers to a physical resource consisting of a number of symbols in the time domain and a number of consecutive subcarriers spanning a defined bandwidth in the frequency domain. Figure 5 shows SEM 508 of the serving network node of the second radio system and resource blocks to which SEM 508 is applied.

The part of frequency band F where F1 and F2 overlap forms an intersected frequency range. In the example of Figure 5, the intersected frequency range F corresponds with F1, F2. As may be seen from Figure 5, even if the frequency ranges F1 and F2 of the radio system overlap in full, the uplink carrier frequency bands 500, 502, 504 and frequency band of uplink SEM 508 overlap only in parts 510, 512, 514 of the intersected frequency range. The frequency ranges of these parts 510, 512, 514 of the intersected frequency range F are referred to as coinciding frequency ranges.

In telecommunications, term carrier typically refers to a waveform suitable for modulation by an information-bearing signal. This waveform is limited to a frequency band, which is then referred to as a carrier frequency band. Depending on the applied multiple access scheme, a carrier frequency band may incorporate one or more channels. A channel refers to a path for conveying signals from one or more transmitters to one or more receivers, i.e. a distinguishable physical or logical link that connects a data source to a data sink. A carrier application status of a carrier frequency band is a piece of information, the components of which illustrate transmission conditions in the carrier frequency band. A primary component of carrier application status indicates whether one or more channels in the carrier frequency band are engaged in communication at the time of determination. It is known that the channels of the narrowband radio are assigned to terminals for the period they are engaged in communication and released right after the communication session ends. For example, let us assume that the narrowband carrier frequency bands 500, 502, 504 are further time-divisioned into channels and Figure 5 illustrates carrier application statuses of frequency bands as a snapshot at a time of determining the carrier application status. In the example, a channel in turn at that time in the carrier frequency band 500 is engaged in communication, but channels in carrier frequency bands 502, 504 are not engaged in communication.

A channel may be engaged in communication, for example, for delivery of user data, for reserved access or for initial access. A channel may be considered to be engaged in communication for delivery of user data while it is assigned to a user or users. A channel may alternatively be considered to be engaged in communication for reserved access while it is reserved to a user for delivery of signalling information. A channel may alternatively be considered to be engaged in communication for initial access when at least one mobile station allowed to signal in a channel of that carrier is registered to the serving network node. Determination of the carrier application status may be implemented in many ways, depending on the radio resource management configuration of the first radio system. A logical radio resource management entity responsible of channel assignments of BS1 inherently keeps track of the channels available in the serving network node and is thus constantly informed on the application status of the channels. In Figure 4 it is assumed that this logical radio resource management entity is included in BS1. However, as discussed earlier, the logical radio resource management entity may exist in some other physical network node.

Information on the determined carrier application status of the one or more carrier frequency bands in the serving network node BS1 116 of the first radio system is then delivered to a serving network node BS2 120 of the second radio system. There the delivered carrier application status information is used to control transmissions of the serving network node BS2.

Also in the second radio system side the serving network node refers to a co-operating combination of logical radio resource management entities. Figure 4 shows that the carrier application status information is delivered from BS1 to BS2, but the physical implementation may comprise also other types of arrangements. A functional unit determining the carrier application status of BS1 may exist in another physical network node of the first radio system, and this network node may be configured to send the carrier application status information to BS2. On the other hand, the determination on carrier application status information may be implemented in BS1, and BS1 may be configured to send the determined information to a network node that participates to or is responsible of the radio resource management operations of BS2. The divided configuration of radio resource management operations of the network nodes in the radio interface may be applied even in both radio systems. What is essential is that the determination is based on carrier frequency bands of the network node that is directly in the radio interface of the first radio system and that power level control operations are performed in carrier frequency bands of the network node directly in the radio interface of the second radio system.

Control operations in the second radio system may be implemented in various ways. Figure 5 illustrates a mechanism where BS2 uses the carrier application status information to control specific portions of the uplink spectrum to limit interference experienced in the narrowband carrier frequency band 500. Control may be implemented, for example, by adjusting parameters of a power control algorithm applied to channels of BS2 and/or via radio resource management decisions.

Figure 5 shows an exemplary case of control operations in SC-FDMA-based serving network node. The group of resource blocks 516 overlap with and/or are adjacent to a coinciding frequency band 500, so uplink transmit power control of BS2 needs to consider also interference to carrier frequency bands of BS1. Accordingly, when carrier application status information received from BS1 identifies the carrier frequency band 500 to be engaged in communication, the serving network node BS2 of the second radio system may use this information to apply a parameter set that reduces uplink transmit power in resource blocks 516 that overlap the coinciding frequency band 500 in part 510 of the intersected frequency range F. In Figure 5 this reduction is shown as a local dip in SEM 508. Due to such dynamically selected reduction of uplink transmit power, the power level P in other intersecting parts of SEM 508 may be kept in a higher level without compromising interference caused to the first radio system. Additionally, in case carrier application status information on the first radio system indicates that the carrier frequency band 500 is inactive, parameters allowing higher uplink transmit power levels in resource blocks 516 may be dynamically taken into use.

As an alternative or a further control mechanism, the carrier application status information on the first radio system may be taken into consideration in assignment of resource blocks in the serving network node of the second radio system. For example, in case of Figure 5, BS2 may primarily avoid allocating resource blocks 516 whenever carrier application status of BS1 information indicates activity in the coinciding frequency range 510.

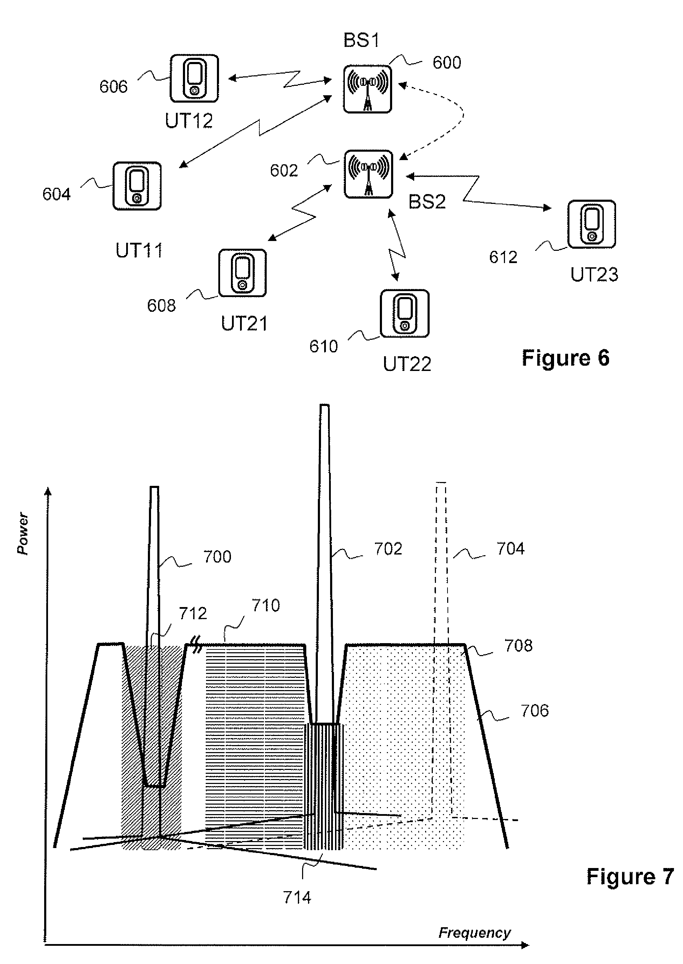

In heavy traffic conditions it is not always possible or desired to completely avoid assignment of radio resources of the network node of the second radio system in frequency ranges 510, 512, 514, even if the overlapping frequency ranges of the network node of the first radio system are engaged in communication. Figures 6 and 7 illustrate another exemplary mechanism for the implementation of the control operations in the second radio system. In the mechanism the carrier application status of a carrier frequency band comprises an interference element that indicates interference conditions in the carrier frequency band. The method of controlling transmissions in a carrier frequency band is then selected based on this interference element. Figure 6 illustrates this by means of a multi-user situation where a serving network node BS1 600 serves two user terminals UT11 604 and UT12 606. A serving network node BS2 602, on the other hand, serves three user terminals UT21 608, UT22 610, and UT23 612.

Figure 7 illustrates the exemplary uplink radio access configuration of the serving network nodes BS1, BS2 of Figure 6. Frequency bands 700, 702, 704 represent uplink carrier frequencies of the serving network node BS1 of the first radio system. Figure 7 also shows SEM 708 of the serving network node BS2 of the second radio system and resource blocks to which SEM 708 is applied.

Let us assume that in BS1 a channel in the carrier frequency band 700 is allocated for UT11 for communication, and a channel in the carrier frequency band 702 is allocated for UT12 for communication. The carrier frequency band 704 shown with dashed line is assumed to be presently inactive. Channel allocations in BS2 are shown with fill patterns of the resource blocks. A first set 708 of resource blocks is assigned to UT21, and a second set 710 of resource blocks is assigned to UT23. As may be seen, the capacity in the side of the second radio system is getting scarce, so any radio resources available should be effectively taken into use.

In order to enable this, the carrier application status information on the first radio system is configured to include a further component that indicates interference conditions in one or more carrier frequency bands of the network node of the first radio system. For example, Carrier-to-Interference ratio (C/I) may be used as a further component. In the present example, it is assumed that carrier application status information on carrier frequency band 700 comprises a component that indicates the carrier frequency band to be engaged in communication and another component that indicates unfavourable interference conditions. Carrier application status information on carrier frequency band 702 also comprises a component that indicates the carrier frequency band to be engaged in communication, but the other component indicates favourable interference conditions. Accordingly, the carrier application status information may be taken into consideration in such that the third set of resource blocks 712 is kept inactive in order to control interference to the active narrowband carrier frequency band 700.

However, the fourth set of resource blocks 714 may, due to the favourable interference conditions in BS1 be assigned for communication, even if BS1 is active in the coinciding frequency range. Furthermore, in case the component that indicates favourable interference conditions is quantitative, like a number indicating the level of interference experienced in a carrier frequency band of BS1, it can be used as feedback for a process where the level of uplink transmit power is incrementally increased. After each increase the feedback may be checked and increase may be continued until the feedback indicates that an interference level allowed in the first radio system is reached. The presented mechanism enables efficient control of inter-system interference and at the same time economical use of radio resources.

It is noted that uplink power control is described here as one advantageous mechanism to control interference caused by transmissions of BS2 to channels in carrier frequency bands of BS1. However, other control mechanisms are available and well known to a person skilled in the art. For example, as an alternative mechanism, BS2 may be configured to schedule transmissions in the uplink such that interference to the carrier frequency bands of the first radio system are reduced by lowering the rate of use of the resource blocks.

It is also noted that the proposed interaction between radio systems may have further advantageous uses. For example, carrier application status may be used to enhance control of cell re-selection procedures. Let us assume a case where BS1 is configured to consider registered mobile stations inactive until a channel is reserved or assigned to it. This means that a main carrier carrying a common control channel of BS1 is considered not engaged in communication. However, BS1 may be configured to use carrier application status to inform BS2 that a channel carrying a common control channel of BS1 is engaged in communication at the time the signal strength comes close to thresholds that trigger cell re-selection procedures. In response to this, BS2 may decrease its uplink transmit power levels in resource blocks that overlap the main carrier. This is expected to enhance the signal levels of the mobile station experienced by BS1 such that it does not need to trigger cell re-selection, and thereby create additional signalling and decrease quality of service during the cell re-selection procedure.

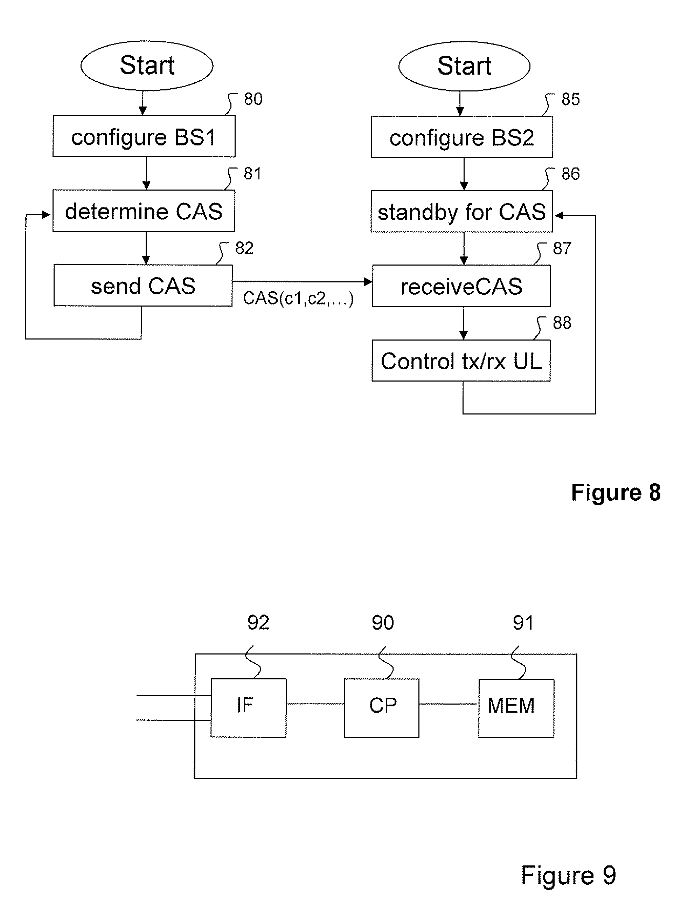

Figure 8 illustrates inter-related methods implemented in a serving network node BS1 of the first radio system and in the serving network node BS2 of the second radio system. The methods correspond to activities described in connection with Figure 4 to 7, so relevant information and definitions may be referred also from descriptions of them. The procedure in BS1 begins when the serving network node is switched on and commissioned to be used. In the beginning, BS1 is configured to operate as a serving network node of the first radio system (stage 80). The configuration step comprises well documented conventional stages of network node configuration, including taking into use a defined set of carrier frequency bands, as shown in Figure 5. In addition to that BS1 is also provided with a physical connection and applicable communication interface to communicate with BS2. BS1 is furthermore provided with functional units for implementing steps 81, 82 described in the following. A more detailed description on implementing functional units in BS1 and BS2 is provided with description of Figure 9.

After configuration, BS1 is operational and begins to serve terminals within its service area. In the course of operation, BS1 allocates channels from the carrier frequency bands it is configured with. According to defined scheme BS1 further determines (stage 81) carrier application status CAS of these frequency bands. Carrier activity status CAS may comprise a component *c1* that indicates whether one or more channels in the carrier frequency band are engaged in communication at the time of determination. Carrier activity status CAS may also comprise a component c2 that indicates the interference conditions in a reported carrier frequency band. Carrier activity status CAS may comprise also other components that are indicative of the transceiving status or conditions in the carrier frequency bands of BS1. The defined scheme may comprise, for example, determination at timed intervals, or determination may be triggered in response to predetermined channel allocation operations of BS1.

BS1 then delivers (stage 82) the determined carrier application status CAS (c1,c2,...) to the serving network node BS2 of the second radio system and returns to step 81 for the next predefined determination.

The procedure in BS2 begins correspondingly when the serving network node BS2 is switched on and commissioned to use. In the beginning, BS1 is configured to operate as a serving network node of the second radio system (stage 85). In the case of exemplary broadband BS2, the configuration step comprises taking into use a defined frequency range occupied by resource blocks, as shown in Figure 5. In addition to that BS2 is also provided with a physical connection and applicable communication interface to communicate with BS1. BS2 is furthermore provided with functional units for implementing steps 86 to 88 described in the following.

After configuration BS2 is operational and begins to assign resource blocks for terminals operating within its service area. During its operation BS2 is furthermore standby (step 86) for delivery of carrier application status information CAS (c1,c2,...) from BS1. After receiving (step 87) carrier application status information, BS2 uses its components to control (step 88) uplink transmissions in its configured frequency range. After necessary control functions, BS2 returns to step 86 for next delivery of CAS.

As discussed above, the serving network nodes described above represent logical communication entities that may be considered as a combination of physical computing equipment and a series of coded commands that implement operations presented for these logical entities in Figures 1 to 8. In the following description such logical entities are jointly referred to as a communication apparatus. Figure 9 shows a block diagram illustrating an exemplary implementation for an embodiment of a communication apparatus, various operations of which have been described in detail above.

The communication apparatus is a special-purpose computer device that comprises a processor unit 90 for performing systematic execution of operations upon data. The processor unit 90 is an element that essentially comprises one or more arithmetic logic units, a number of special registers and control circuits. Memory unit 91, which is data medium where computer-readable data or programs, or user data can be stored, is connected to the processor unit 90. The memory unit 91 typically comprises volatile or nonvolatile memory, for example EEPROM, ROM, PROM, RAM, DRAM, SRAM, firmware, programmable logic, etc.

The device also comprises an interface unit 92 with at least one input unit for inputting data to the internal processes of the device and at least one output unit for outputting data from the internal processes of the device. Where a line interface is applied, the interface unit typically comprises plug-in units acting as a gateway for delivering information from the interface unit to external connection wires and for receiving information from external connection wires to the interface unit.

Where a radio or wireless interface is applied, the interface unit typically comprises a radio transceiver unit, which includes a transmitter and a receiver connected to an antenna. The radio interface is also electrically connected to the processor unit 90. The transmitter of the radio transceiver unit receives a bitstream from the processor unit 90, and converts it to a radio signal for transmission by the antenna. Correspondingly, the radio signals received by the antenna are fed to the receiver of the radio transceiver unit, which converts each radio signal into a bitstream that is forwarded for further processing to the processor unit 90. Different radio interfaces may be implemented with one radio transceiver unit, or with separate radio transceiver units which may be provided for different radio interfaces.

The interface unit 92 of the device may also comprise a user interface with a keypad, a touch screen, a microphone, and/or equals for inputting data and a screen, a touch screen, a loudspeaker, and/or equals for outputting data.

The processor unit 90, the memory unit 91, and the interface unit 92 are electrically interconnected to perform systematic execution of operations on the received and/or stored data according to the predefined, essentially programmed processes of the device. The systematic operation of these units thus provides means for the procedures, or means for performing one or more stages of the procedures, which have been described in more detail with each respective embodiment.

In general, various embodiments of the device may be implemented in hardware or special purpose circuits, software, logic or any combination thereof. Some aspects may be implemented in hardware, while some other aspects may be implemented in firmware or software, which may be executed by a controller, microprocessor or other computing device. Software routines, which are also called as program products, are articles of manufacture and can be stored in any device-readable data storage medium and they include program instructions to perform particular tasks. Thus the exemplary embodiments of this invention also provide computer program products, readable by a computer and encoding instructions for executing a process in the communication apparatus of Figure 9.

While various aspects of the invention may be illustrated and described as block diagrams, message flow diagrams, flow charts and logic flow diagrams, or using some other pictorial representation, it is well understood that the illustrated units, blocks, device, system elements, procedures and methods may be implemented in, for example, hardware, software, firmware, special purpose circuits or logic, a computing device or some combination thereof. Furthermore, it will be obvious to a person skilled in the art that, as the technology advances, the inventive concept can be implemented in various ways. The invention and its embodiments are not limited to the examples described above but may vary within the scope of the claims.

## Claims

1. A method, comprising:
operating (80) as a network node of a first radio system configured to transceive in all or part of a first frequency range;
connecting to a network node managing a radio resource in a second radio system, the second radio system being of different type than the first radio system, the radio resource in the second radio system comprising all or part of a second frequency range, the first frequency range and the second frequency range overlapping at least partly, the overlapping part of the first and the second frequency ranges forming an intersected frequency range;
determining (81) carrier application status of carrier frequency bands of the first frequency range that are in the intersected frequency range, the carrier application status indicating whether a channel in the carrier frequency band is engaged in communication at the time of determination, the carrier application status of a carrier frequency band including an interference element that indicates interference conditions in the carrier frequency band; and
sending (82) information on the determined carrier application status to the network node of the second radio system..

2. A method according to claim 1, further comprising determining (81) the carrier application status at timed intervals, or in response to one or more predetermined channel allocation operations of the network node.

3. A method according to claim 1, further comprising indicating a carrier frequency band to be engaged in communication when at least one channel in the carrier frequency band is used for delivery of user data, for reserved access or for initial access.

4. A method according to claim 3, further comprising indicating a carrier frequency band to be engaged in communication when at least one channel in the carrier frequency band is assigned to a user for delivery of user data, or reserved to a user for delivery of signalling information.

5. A method according to claim 3, further comprising indicating a carrier frequency band to be engaged in communication when at least one mobile station allowed to signal in a channel of that carrier frequency band is registered to the network node.

6. A method, comprising:
connecting to a network node of a first radio system transceiving over a first frequency range;
operating (85) as a network node of a second radio system transceiving over a second frequency range, the second radio system being of different type than the first radio system, the first frequency range and the second frequency range overlapping at least partly, the overlapping part of the first and the second frequency ranges forming an intersected frequency range;
maintaining (86) a transmission control function for controlling transmissions in one or more frequency ranges in the second frequency range, the transmission control function being responsive to carrier application status of one or more of the carrier frequency bands of the first radio system in the intersected frequency range, the carrier activity status of a carrier frequency band indicating whether a channel in the carrier frequency band is engaged in communication at the time of determination, the carrier application status of a carrier frequency band comprising an interference element that indicates interference conditions in the carrier frequency band;
receiving (87) carrier activity status of one or more of the carrier frequency bands in the intersected frequency range from the access network node of the first radio system;
selecting the method of controlling transmissions in a carrier frequency band based on the interference element; and
using (88) the received carrier activity status in the transmission control function to control transmissions in one or more carrier frequency bands in the intersected frequency range.

7. A method according to claim 6, further comprising controlling (88) transmissions in a carrier frequency band by adjusting parameters of a power control algorithm applied to a channel in the carrier frequency band.

8. A method according to claim 7, further comprising controlling (88) transmissions in a carrier frequency band by lowering the rate of use of resource blocks in the intersected frequency range.

9. A method according to claim 6, 7 or 8, further comprising controlling (88) transmissions in a carrier frequency band via radio resource management decisions.

10. A communication apparatus (116, 120, 600, 602) configured to implement any of the above methods 1 to 9.

11. A communications system including a network node (116, 600) configured to implement any of methods 1 to 5 and a network node (120, 602) configured to implement any of methods 6 to 9.

12. A computer program comprising program code means adapted to perform the method of any of claims 1 to 9 when the program is run on a computer device.

## Patentansprüche

1. Verfahren, umfassend:
Arbeiten (80) als ein Netzwerkknoten eines ersten Funksystems, das dazu konfiguriert ist, in dem gesamten oder einem Teil eines ersten Frequenzbereichs zu senden und zu empfangen;
Verbinden mit einem Netzwerkknoten, der eine Funkressource in einem zweiten Funksystem verwaltet, wobei das zweite Funksystem von einem anderen Typ als das erste Funksystem ist, die Funkressource im zweiten Funksystem den gesamten oder einen Teil eines zweiten Frequenzbereichs umfasst, wobei sich der erste Frequenzbereich und der zweite Frequenzbereich zumindest zum Teil überlappen, der überlappende Teil des ersten und des zweiten Frequenzbereichs einen Überschneidungs-Frequenzbereich bilden;
Bestimmen (81) eines Träger-Anwendungszustands von Trägerfrequenzbändern des ersten Frequenzbereichs, die sich in dem Überschneidungs-Frequenzbereich befinden, wobei der Träger-Anwendungszustand anzeigt, ob ein Kanal in dem Trägerfrequenzband zum Zeitpunkt der Bestimmung in eine Kommunikation eingebunden ist, der Träger-Anwendungszustand eines Trägerfrequenzbands ein Interferenzelement beinhaltet, das die Interferenzzustände in dem Trägerfrequenzband anzeigt; und
Senden (82) von Informationen über den bestimmten Träger-Anwendungszustand an den Netzwerkknoten des zweiten Funksystems.

2. Verfahren nach Anspruch 1, des Weiteren umfassend das Bestimmen (81) des Träger-Anwendungszustands in zeitlich festgelegten Intervallen, oder in Reaktion auf einen oder mehrere vorgegebene Kanalzuteilungsvorgänge des Netzwerkknotens.

3. Verfahren nach Anspruch 1, des Weiteren umfassend das Anzeigen eines Trägerfrequenzbandes, das in eine Kommunikation einzubinden ist, wenn mindestens ein Kanal in dem Trägerfrequenzband für die Lieferung von Benutzerdaten verwendet wird, für reservierten Zugriff oder anfänglichen Zugriff.

4. Verfahren nach Anspruch 3, des Weiteren umfassend das Anzeigen eines Trägerfrequenzbandes, das in eine Kommunikation einzubinden ist, wenn mindestens ein Kanal in dem Trägerfrequenzband einem Benutzer für die Lieferung von Benutzerdaten zugewiesen wird, oder für einen Benutzer für die Lieferung von Signalinformationen reserviert ist.

5. Verfahren nach Anspruch 3, des Weiteren umfassend das Anzeigen eines Trägerfrequenzbandes, das in eine Kommunikation einzubinden ist, wenn mindestens eine Mobilstation, die zum Signalisieren in einem Kanal dieses Trägerfrequenzbands zulässig ist, bei dem Netzwerkknoten registriert ist.

6. Verfahren, umfassend:
Verbinden mit einem Netzwerkknoten eines ersten Funksystems, das über einen ersten Frequenzbereich sendet und empfängt;
Betreiben (85) als einen Netzwerkknoten eines zweiten Funksystems, das über einen zweiten Frequenzbereich sendet und empfängt, wobei das zweite Funksystem von einem anderen Typ als das erste Funksystem ist, wobei sich der erste Frequenzbereich und der zweite Frequenzbereich zumindest zum Teil überlappen, der überlappende Teil des ersten und des zweiten Frequenzbereichs einen Überschneidungs-Frequenzbereich bilden;
Beibehalten (86) einer Übertragungssteuerungsfunktion zum Steuern von Übertragungen in einem oder mehreren Frequenzbereichen in dem zweiten Frequenzbereich, wobei die Übertragungssteuerungsfunktion auf den Träger-Anwendungszustand von einem oder mehreren der Trägerfrequenzbänder des ersten Funksystems in dem Überschneidungs-Frequenzbereich reagiert, wobei der Träger-Aktivitätszustand eines Trägerfrequenzbandes anzeigt, ob ein Kanal in dem Trägerfrequenzband zum Zeitpunkt der Bestimmung in eine Kommunikation eingebunden ist, wobei der Träger-Anwendungszustand eines Trägerfrequenzbandes ein Interferenzelement umfasst, das Interferenzzustände in dem Trägerfrequenzband anzeigt;
Empfangen (87) des Träger-Aktivitätszustands von einem oder mehreren der Trägerfrequenzbänder in dem Überschneidungs-Frequenzbereich von dem Zugangsnetzwerkknoten des ersten Funksystems;
Auswählen des Verfahrens zum Steuern von Übertragungen in einem Trägerfrequenzband basierend auf dem Interferenzelement; und
Verwenden (88) des empfangenen Träger-Aktivitätszustands in der Übertragungssteuerungsfunktion zum Steuern von Übertragungen in einem oder mehreren Trägerfrequenzbändern in dem Überschneidungs-Frequenzbereich.

7. Verfahren nach Anspruch 6, des Weiteren umfassend das Steuern (88) von Übertragungen in einem Trägerfrequenzband durch Anpassen von Parametern eines Leistungssteuerungsalgorithmus, der auf einen Kanal in dem Trägerfrequenzband angewendet wird.

8. Verfahren nach Anspruch 7, des Weiteren umfassend das Steuern (88) von Übertragungen in einem Trägerfrequenzband durch Verringern der Verwendungsrate von Ressourcenblöcken in dem Überschneidungs-Frequenzbereich.

9. Verfahren nach Anspruch 6, 7 oder 8, des Weiteren umfassend das Steuern (88) von Übertragungen in einem Trägerfrequenzband über Funkressourcen-Verwaltungsentscheidungen.

10. Kommunikationsvorrichtung (116, 120, 600, 602), die dazu konfiguriert ist, eines der oben genannten Verfahren 1 bis 9 zu implementieren.

11. Kommunikationssystem, das einen Netzwerkknoten (116, 600) beinhaltet, der dazu konfiguriert ist, eines der Verfahren 1 bis 5 zu implementieren, und einen Netzwerkknoten (120, 602), der dazu konfiguriert ist, eines der Verfahren 6 bis 19 zu implementieren.

12. Computerprogramm, umfassend Programmcodemittel, die dazu eingerichtet sind, das Verfahren nach einem der Ansprüche 1 bis 9 durchzuführen, wenn das Programm auf einem Computergerät ausgeführt wird.

## Revendications

1. Procédé, comportant :
le fonctionnement (80) en tant que noeud de réseau d'un premier système radio configuré pour émettre et recevoir dans tout ou partie d'une première plage de fréquences ;
la connexion à un noeud de réseau gérant une ressource radio dans un second système radio, le second système radio étant d'un type différent par rapport au premier système radio, la ressource radio dans le second système radio comportant tout ou partie d'une seconde plage de fréquences, la première plage de fréquences et la seconde plage de fréquences se chevauchant au moins partiellement, la partie de chevauchement des première et seconde plages de fréquences formant une plage de fréquences d'intersection ;
la détermination (81) d'un état d'application de porteuse de bandes de fréquences porteuses de la première plage de fréquences qui se trouvent dans la plage de fréquences d'intersection, l'état d'application de porteuse indiquant si un canal dans la bande de fréquences porteuses établit une communication au moment de la détermination, l'état d'application de porteuse d'une bande de fréquences porteuses comprenant un élément d'interférence qui indique des conditions d'interférence dans la bande de fréquences porteuses ; et
l'envoi (82) d'une information concernant l'état d'application de porteuse déterminée au noeud de réseau du second système radio.

2. Procédé selon la revendication 1, comportant en outre la détermination (81) de l'état d'application de porteuse à des intervalles temporels, ou en réponse à une ou plusieurs opérations d'allocation de canal prédéterminé du noeud de réseau.

3. Procédé selon la revendication 1, comportant en outre l'indication d'une bande de fréquences porteuses pour établir une communication lorsqu'au moins un canal dans la bande de fréquences porteuses est utilisé pour délivrer des données d'utilisateur, pour un accès réservé ou pour un accès initial.

4. Procédé selon la revendication 3, comportant en outre l'indication d'une bande de fréquences porteuses pour établir une communication lorsqu'au moins un canal dans la bande de fréquences porteuses est assigné à un utilisateur pour délivrer des données d'utilisateur, ou réservé à un utilisateur pour délivrer une information de signalisation.

5. Procédé selon la revendication 3, comportant en outre l'indication d'une bande de fréquences porteuses pour établir une communication lorsqu'au moins une station mobile autorisée pour signaler un canal de cette bande de fréquences porteuses est enregistrée dans le noeud de réseau.

6. Procédé, comportant :
la connexion à un noeud de réseau d'un premier système radio émettant et recevant sur une première plage de fréquences ;
le fonctionnement (85) en tant que noeud de réseau d'un second système radio émettant et recevant sur une seconde plage de fréquences, le second système radio étant d'un type différent par rapport au premier système radio, la première plage de fréquences et la seconde plage de fréquences se chevauchant au moins partiellement, la partie de chevauchement des première et seconde plages de fréquences formant une plage de fréquences d'intersection ;
le maintien (86) d'une fonction de contrôle de transmission pour contrôler des transmissions dans une ou plusieurs plages de fréquences dans la seconde plage de fréquences, la fonction de contrôle de transmission étant sensible à un statut d'application de porteuse d'une ou de plusieurs bandes de fréquences porteuses du premier système radio dans la plage de fréquences d'intersection, l'état d'activité de porteuse d'une bande de fréquences porteuses indiquant si un canal dans la bande de fréquences porteuses établit une communication au moment de la détermination, l'état d'application de porteuse d'une bande de fréquences porteuses comportant un élément d'interférence qui indique des conditions d'interférence dans la bande de fréquences porteuses ;
la réception (87) de l'état d'activité de porteuse d'une ou de plusieurs bandes de fréquences porteuses dans la plage de fréquences d'intersection à partir du noeud de réseau d'accès du premier système radio ;
la sélection du procédé de contrôle de transmission dans une bande de fréquences porteuses en fonction de l'élément d'interférence ; et
l'utilisation (88) de l'état d'activité de porteuse reçu dans la fonction de contrôle de transmission pour contrôler des transmissions dans une ou plusieurs bandes de fréquences porteuses dans la plage de fréquences d'intersection.

7. Procédé selon la revendication 6, comportant en outre le contrôle (88) des transmissions dans une bande de fréquences porteuses en ajustant les paramètres d'un algorithme de contrôle de puissance appliqué à un canal dans la bande de fréquences porteuses.

8. Procédé selon la revendication 7, comportant en outre le contrôle (88) des transmissions dans une bande de fréquences porteuses en réduisant le taux d'utilisation des blocs de ressources dans la plage de fréquences d'intersection.

9. Procédé selon la revendication 6, 7 ou 8, comportant en outre le contrôle (88) des transmissions dans une bande de fréquences porteuses par l'intermédiaire de décisions de gestion de ressources radio.

10. Appareil de communication (116, 120, 600, 602) configuré pour réaliser l'un quelconque des procédés 1 à 9 précités.

11. Système de communications comprenant un noeud de réseau (116, 600) configuré pour réaliser l'un quelconque des procédés 1 à 5 et un noeud de réseau (120, 602) configuré pour réaliser l'un des procédés 6 à 9.

12. Programme informatique comportant des moyens de code de programme adaptés pour effectuer le procédé selon l'une quelconque des revendications 1 à 9 lorsque le programme fonctionne sur un dispositif informatique.
